# EUROPÄISCHE PATENTSCHRIFT

(11) **EP 2 463 054 B1**
(45) Veröffentlichungstag und Bekanntmachung des Hinweises auf die Patenterteilung: **22.05.2013**
(21) Anmeldenummer: 11188541.4
(22) Anmeldetag: 10.11.2011
(51) Int. Cl.: B23Q 1/48, B25H 1/00

(54) **Vorrichtung zur Führung eines Werkzeuggerätes**
Device for guiding a tool
Dispositif destiné au guidage d'un outil

(30) Priorität: 09.12.2010 DE 102010062709
(43) Veröffentlichungstag der Anmeldung: 13.06.2012
(73) Patentinhaber: HILTI Aktiengesellschaft, 9494 Schaan (LI)
(72) Erfinder: Sattler, Christian, 87640 Biessenhofen (DE)

(56) Entgegenhaltungen:
- EP-A2- 0 139 819
- US-A- 4 468 159
- US-B1- 6 309 148

## Beschreibung

Die vorliegend Erfindung betrifft eine Vorrichtung zur Führung eines Werkzeuggerätes mit den Merkmalen gemäß dem Oberbegriff des Patentanspruchs 1.

Bekannte Vorrichtungen zur Führung eines Werkzeuggerätes entlang einer Vorschubrichtung bestehen aus einer Grundplatte, die mittels einer Befestigungseinrichtung an einem Untergrund befestigbar ist, und einer Führungsschiene, die mit der Grundplatte verbindbar ist und eine Kontureinrichtung aufweist. Das Werkzeuggerät ist über einen Führungsschlitten an der Führungsvorrichtung angeordnet und mittels einer Vorschubeinrichtung entlang der Führungsschiene in der Vorschubrichtung verschiebbar. Der Führungsschlitten weist eine Gegenkontureinrichtung auf, die mit der Kontureinrichtung in Eingriff bringbar ist.

Eine derartige Vorrichtung zur Führung eines Werkzeuggerätes ist in der US-Patentschrift 6.309,148 beschrieben. Die Vorrichtung zur Führung eines Werkzeuggerätes weist dabei unter anderem eine Führungsschiene, eine horizontal ausgerichtete Grundplatte sowie einen Führungsschlitten zum Halten eines Werkzeuggerätes auf. Die Führunasschiene ist so mit der Grundplatte verbunden, dass die führungsschiene vertikal aufgerichtet ist. Der Führungsschlitten zum Halten des Werkzeuggerätes ist an der führungsschiene vertikal bewegbar. Mit Hilfe einer Schwenkvorrichtung kann die Führungsschiene mitsamt dem Werkzeuggerät auf der Grundplatte geschwenkt werden.

Beim Erstellen von Kernlochbohrungen wirken große Kräfte und Drehmomente, die von der Führungsvorrichtung aufgenommen werden müssen. Daher sind ein sicherer Stand und eine ausreichende Befestigung der Führungsvorrichtung auf einem Untergrund erforderlich. Bei Kernlochbohrungen in Treppenstufen besteht das Problem, dass die Grundfläche, auf der die Grundplatte der Führungsvorrichtung am Untergrund befestigt werden kann, sehr begrenzt ist.

Die Aufgabe der vorliegenden Erfindung besteht darin, eine Vorrichtung zur Führung eines Werkzeuggerätes dahingehend weiterzuentwickeln, dass das Erstellen von Kernlochbohrungen in Treppenstufen erleichtert ist.

Diese Aufgabe wird bei der eingangs genannten Vorrichtung zur Führung eines Werkzeuggerätes erfindungsgemäß durch die Merkmale des unabhängigen Patentanspruchs 1 gelöst. Vorteilhafte Ausgestaltungen ergeben sich aus den abhängigen Patentansprüchen. Erfindungsgemäß ist vorgesehen, dass die Führungsschiene mit einem Achselement verbunden ist und relativ zur Grundplatte um eine zur Vorschubrichtung parallele Drehachse drehbar ausgebildet ist. Der Vorteil der drehbaren Führungsschiene besteht darin, dass die Grundplatte bei einem begrenzten Untergrund so ausgerichtet werden kann, dass die Grundplatte sicher am Untergrund befestigt ist. Das Werkzeuggerät kann über die drehbare Führungsschiene in die gewünschte Bearbeitungsposition gedreht werden.

Bevorzugt ist das Achselement in einem ersten Lagerelement der Grundplatte und einem zweiten Lagerelement der Führungsschiene gelagert.

Besonders bevorzugt ist das Achselement in einem weiteren Lagerelement der Führungsschiene gelagert, wobei das weitere Lagerelement an einem der Grundplatte abgewandten Ende der Führungsschiene angeordnet ist. Das weitere Lagerelement erhöht die Stabilität und Ausrichtung der Führungsschiene parallel zur Drehachse. Außerdem kann eine Feststelleinrichtung zur Feststellung der Führungsschiene über das Achselement an der Oberseite der Führungsschiene vorgesehen werden, die gut zugänglich und einfach bedienbar ist gegenüber einer Feststelleinrichtung, die zwischen der Grundplatte und der Führungsschiene angeordnet ist.

In einer bevorzugten Ausführungsform ist das Achselement drehfest mit der Grundplatte verbunden und die Führungsschiene ist relativ zum Achselement um die Drehachse drehbar ausgebildet. Diese Ausführungsform ist vorteilhaft, wenn das Achselement in zwei Lagerelementen der Führungsschiene, die an einander gegenüber liegenden Enden angebracht sind, gelagert ist. Durch diese Lagerung ist das Achselement gut geführt und die Ausrichtung der Führungsschiene bei der Drehung um die Drehachse ist stabil und parallel zur Vorschubrichtung. Diese Ausführungsform eignet sich vor allem für schwere Führungsschienen.

In einer alternativen bevorzugten Ausführungsform ist das Achselement drehfest mit der Führungsschiene verbunden und relativ zur Grundplatte um die Drehachse drehbar ausgebildet. Diese Ausführungsform ist vorteilhaft, wenn das Achselement in zwei Lagerelementen der Grundplatte, die an einander gegenüber liegenden Enden angebracht sind, gelagert ist. Diese Ausführungsform eignet sich vor allem für kurze und/oder leichte Führungsschienen.

Bevorzugt ist eine Feststelleinrichtung zur Feststellung der Führungsschiene vorgesehen, wobei die Führungsschiene mittels der Feststelleinrichtung zwischen einer Verstellposition, in der die Führungsschiene relativ zur Grundplatte um die Drehachse drehbar ausgebildet ist, und einer Feststellposition, in der die Führungsschiene relativ zur Grundplatte drehfest ausgebildet ist, verstellbar ist. Durch die Feststelleinrichtung kann die Ausrichtung der Führungsschiene relativ zur Grundplatte festgestellt werden, so dass eine unbeabsichtigte Drehung der Führungsschiene sicher vermieden wird. Die Führungsschiene darf während der Bearbeitung nur dann zur Vorschubbewegung des Führungsschlittens eingesetzt werden, wenn die Position der Führungsschiene festgestellt ist. Ist dies nicht der Fall, kann es zu Unfällen oder Beschädigungen des Gerätesystems kommen.

In einer bevorzugten Ausführungsform ist zwischen der Führungsschiene und der Grundplatte eine Vorrichtung zum Ausrichten der Führungsschiene vorgesehen. Eine Vorrichtung zum Ausrichten der Führungsschiene hat den Vorteil, dass die Führungsschiene sehr genau zur Grundplatte ausgerichtet werden kann.

In einer weiteren bevorzugten Ausführungsform weist die Führungseinrichtung ein Federelement auf. Dies hat den Vorteil, dass der Verschleiß der Erhebung der Führungseinrichtung durch die Begrenzung der Druckkraft auf die Erhebung bzw. auf die Begrenzungen der Vertiefung, reduziert wird. Durch die federnd ausgeführte Erhebung ist die Verdrehung aus den Vorzugspositionen gegen das Federelement möglich. Dabei weist das Federelement bevorzugt eine Kugel und eine Druckfeder auf. Das Maß der Erhebung, Überstand der Kugel, ist durch einen geometrischen Anschlag der Kugel in der Bohrung in der Führungseinrichtung definiert.

Gemäß der Erfindung umfasst die Grundplatte eine Befestigungsplatte, die mittels der Befestigungseinrichtung am Untergrund befestigbar ist, und einen Führungsschienenabschnitt mit einer Kontureinrichtung, wobei der Führungsschienenabschnitt mit dem Achselement verbunden ist und die Führungsschiene relativ zum Führungsschienenabschnitt um die Drehachse drehbar ausgebildet ist. Diese Ausführungsform hat den Vorteil, dass der Führungsschlitten sowohl entlang der Führungsschiene als auch entlang des Führungsschienenabschnittes verschiebbar ist. Bei der Bearbeitung von Treppenstufen können Kernlochbohrungen in einer tiefer liegenden und einer höher liegenden Treppenstufe durchführt werden. Dabei wird die Grundposition der Führungsschiene und des Führungsschienenabschnittes so ausgerichtet, dass die Kontureinrichtungen bei der Bearbeitung der tiefer liegenden Treppenstufe fluchten, da in diesem Fall auch der Führungsschienenabschnitt zur Führung des Werkzeuggerätes genutzt werden kann.

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Der Einfachheit halber sind nachfolgend für identische oder ähnliche Teile oder Teile mit identischer oder ähnlicher Funktion gleiche Bezugszeichen verwendet.

Es zeigen:
- Fig. 1: ein ständergeführtes Gerätesystem mit einem Kernbohrgerät, das über einen Führungsschlitten an einer Führungsschiene eines Bohrständers geführt ist, wobei die Führungsschiene über ein Achselement relativ zu einer Grundplatte um eine Drehachse drehbar ausgebildet ist;
- Fign. 2A, B: die drehbar ausgebildete Führungsschiene der Fig. 1 in einer dreidimensionalen Ansicht (Fig. 2A) und in einem Halbschnitt (Fig. 2B);
- Fig. 3: einen Ausschnitt der Führungsschiene mit einem Lagerelement, in das eine Führungseinrichtung zum Ausrichten der Führungsschiene integriert ist;
- Fign. 4A, B: eine Anwendung eines ständergeführten Gerätesystems mit einer drehbar ausgebildeten Führungsschiene beim Erstellen von Kernlochbohrungen in einer Treppe, wobei Kernlochbohrungen in einer tiefer liegenden Treppenstufe (Fig. 4A) und einer höher liegenden Treppenstufe (Fig. 4B) ausgeführt werden.

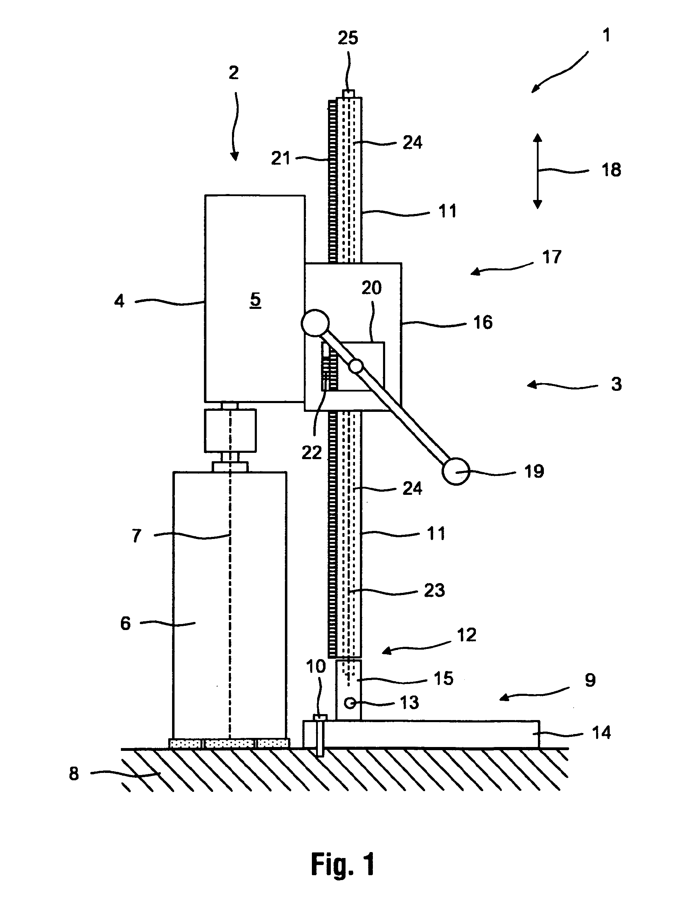

**Fig. 1** zeigt in einer schematischen Darstellung ein ständergeführtes Gerätesystem **1** bestehend aus einem Werkzeuggerät 2, das an einer als Bohrständer ausgebildeten Führungsvorrichtung 3 angeordnet ist. Das Werkzeuggerät ist als Kernbohrgerät 2 ausgebildet und umfasst eine in einem Maschinengehäuse **4** angeordnete Maschineneinheit **5,** die eine Bohrkrone **6** um eine Drehachse **7** antreibt.

Der Bohrständer 3 ist an einem Untergrund **8** angeordnet und besteht aus einer Grundplatte **9,** die mittels einer Befestigungseinrichtung **10** am Untergrund 8 befestigbar ist, und einer Führungsschiene **11,** die mittels einer Verbindungseinrichtung **12** mit der Grundplatte 9 verbunden ist. Um schräg verlaufende Bohrlöcher erstellen zu können, ist die Führungsschiene 11 um eine Neigungsachse **13,** die senkrecht zur Zeichenebene verläuft, zur Grundplatte 9 neigbar. Die Grundplatte 9 umfasst eine Befestigungsplatte **14,** mit der die Grundplatte 9 am Untergrund 8 befestigt wird, und ein Neigungsgelenk **15,** das um die Neigungsachse 13 drehbar und mit der Verbindungseinrichtung 12 verbunden ist.

Wenn eine Neigung der Führungsschiene 11 um die Neigungsachse 13 nicht erforderlich ist, kann das Neigungsgelenk 15 entfallen und die Verbindungseinrichtung 12, die die Führungsschiene 11 und die Grundplatte 9 miteinander verbindet, kann entweder direkt mit der Befestigungsplatte 14 oder über einen Abschnitt mit der Grundplatte 9 verbunden werden.

Das Kernbohrgerät 2 ist über einen Führungsschlitten **16** am Bohrständer 3 angeordnet und mittels einer Vorschubeinrichtung **17** entlang der Führungsschiene 11 in einer Vorschubrichtung **18** verschiebbar. Die Vorschubeinrichtung 17 umfasst eine als drehbare Klemmstange ausgebildete Antriebseinrichtung 19 und eine Übertragungseinrichtung **20**, die die Bewegung der Antriebseinrichtung 19 auf den Führungsschlitten 16 überträgt. Die Drehbewegung der Klemmstange 19 wird mittels eines Zahnrades und einer Zahnstange in eine Verschiebung des Führungsschlittens 16 entlang der Führungsschiene 11 umgesetzt. Die Führungsschiene 11 umfasst eine Kontureinrichtung **21**, die als Zahnstange ausgebildet ist und in eine als Zahnrad ausgebildete Gegenkontureinrichtung **22** der Übertragungseinrichtung 20 eingreift. Die Kontureinrichtung 21 und die Gegenkontureinrichtung 22 sind an die Antriebseinrichtung 19 angepasst. Die Vorschubbewegung des Führungsschlittens 16 kann von einer manuellen oder motorischen Antriebseinrichtung über eine Drehbewegung oder eine lineare Bewegung erzeugt werden. Bei einer linearen Antriebsbewegung erfolgt die Übertragung beispielsweise über zwei Zahnräder.

Die Führungsschiene 11 ist um eine zur Vorschubrichtung 18 parallele Drehachse 23 drehbar ausgebildet, wobei die Drehachse 23 außerdem parallel zur Drehachse 7, um die die Bohrkrone 6 beim Erstellen von Kernlochbohrungen bewegt wird, verläuft. Die Drehung der Führungsschiene 11 erfolgt über ein Achselement **24,** das an der Führungsschiene 11 und an der Grundplatte 9 gelagert ist. Die Führungsschiene 11 ist mittels einer Feststelleinrichtung **25** zwischen einer Verstellposition, in der die Führungsschiene 11 relativ zur Grundplatte 9 um die Drehachse 23 drehbar ist, und einer Feststellposition, in der die Führungsschiene 11 relativ zur Grundplatte 9 drehfest ausgebildet ist, verstellbar.

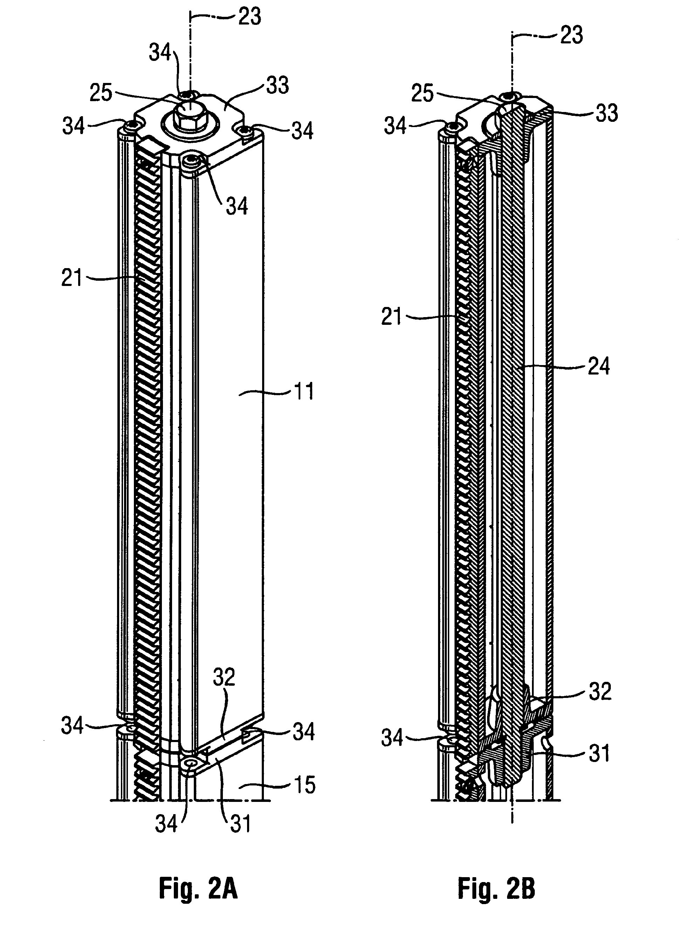

**Fig. 2A****, B** zeigen die um die Drehachse 23 drehbar ausgebildete Führungsschiene 11 der Fig. 1 in einer dreidimensionalen Ansicht (Fig. 2A) und in einem Halbschnitt (Fig. 2B).

Das Achselement 24 ist in einem ersten Lagerelement **31** der Grundplatte 9 sowie in einem zweiten und dritten Lagerelement 32, 33 der Führungsschiene 11 gelagert. Das erste Lagerelement 31 ist an einer der Führungsschiene 11 zugewandten Oberseite der Grundplatte 9 über mehrere Schraubverbindungen **34** drehfest mit der Grundplatte 9 verbunden. Das zweite und dritte Lagerelement 32, 33 sind an einer der Grundplatte 9 zugewandten Unterseite bzw. an einer der Grundplatte 9 abgewandten Oberseite der Führungsschiene 11 über Schraubverbindungen 34 jeweils drehfest mit der Führungsschiene 11 verbunden. Das dritte Lagerelement 33, das an der der Grundplatte 9 abgewandten Oberseite der Führungsschiene 11 angeordnet ist, hat den Vorteil, dass die Feststelleinrichtung 25 an der Oberseite gut zugänglich und einfach bedienbar ist gegenüber einer Feststelleinrichtung, die zwischen den Grundplatte und der Führungsschiene angeordnet ist.

Das Achselement 24 ist sowohl in der Feststellposition als auch in der Verstellposition der Führungsschiene 11 drehfest im ersten Lagerelement 31 gelagert. Die Führungsschiene 11 ist in der Verstellposition relativ zum Achselement 24 um die Drehachse 23 drehbar ausgebildet und in der Feststellposition drehfest zum Achselement 24 angeordnet.

Durch Lösen der Feststelleinrichtung 25 wird die Führungsschiene 11 aus der Feststellposition in die Verstellposition überführt. In der Verstellposition sind das zweite und dritte Lagerelement 32, 33 der Führungsschiene 11 relativ zum Achselement 24 um die Drehachse 23 drehbar. Die Führungsschiene 11 wird in die gewünschte Position gedreht und durch Feststellen der Feststelleinrichtung 25 aus der Verstellposition in die Feststellposition überführt. Die Führungsschiene darf aus Sicherheitsgründen nur dann zur Vorschubbewegung des Führungsschlittens eingesetzt werden, wenn die Position der Führungsschiene 11 festgestellt ist, d.h. wenn die Feststelleinrichtung 25 geschlossen ist. Ist dies nicht der Fall, kann es zu Unfällen oder Beschädigungen des Gerätesystems 1 kommen.

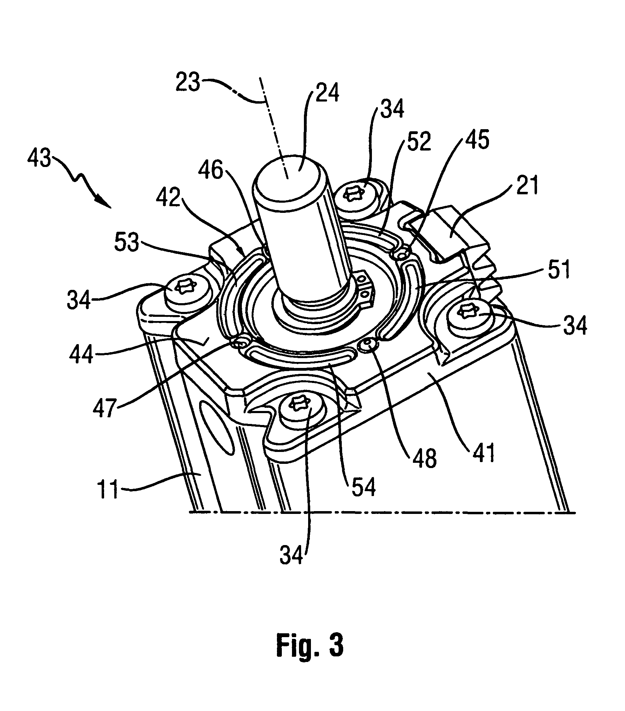

**Fig. 3** zeigt einen Ausschnitt der Führungsschiene 11 mit einem Lagerelement 41 zur Lagerung des Achselementes 24, wobei das Lagerelement **41** zum Ausrichten der Führungsschiene relativ zur Grundplatte 9 eine Führungseinrichtung **42** aufweist. Das Lagerelement 41 entspricht ansonsten dem Aufbau des ersten und zweiten Lagerelementes 31, 32 der Fign. 2A, B und ist analog über Schraubverbindungen 34 drehfest mit der Führungsschiene 11 verbunden.

Die Führungseinrichtung 42 ist Teil einer Vorrichtung **43** zum Ausrichten der Führungsschiene 11. Die Ausrichtvorrichtung 43 umfasst neben der Führungseinrichtung 42, die als erste Führungseinrichtung 42 bezeichnet wird und an der Führungsschiene 11 vorgesehen ist, eine zweite Führungseinrichtung, die in das erste Lagerelement 31 der Grundplatte 9 integriert ist. Um den Fertigungsaufwand zu reduzieren, sind die erste und zweite Führungseinrichtung 42 der Ausrichtvorrichtung 43 identisch aufgebaut.

Das Lagerelement 41 umfasst eine der Grundplatte 9 zugewandte Oberfläche **44**, in die die erste Führungseinrichtung 42 integriert ist. Die erste Führungseinrichtung 42 besteht aus einer ersten, zweiten und dritten Vertiefung **45, 46, 47,** die in die Oberfläche 44 eingelassen sind. Die Vertiefungen 45, 46, 47 sind auf einem Kreisbogen um jeweils 90° zueinander versetzt angeordnet. Die erste Führungseinrichtung 42 weist außerdem eine Führungsnase in Form einer Erhebung **48** auf, die ebenfalls auf dem Kreisbogen angeordnet und um jeweils 90° zur ersten und dritten Vertiefung 45, 47 versetzt ist. Die Erhebung 48 ist um 180° zur zweiten Vertiefung 46 versetzt angeordnet.

In die Oberfläche 44 der ersten Führungseinrichtung 42 sind vier Freistellungsnuten **51, 52**, **53, 54** eingelassen, die in Form eines Kreisabschnittes ausgebildet sind. Die erste Freistellungsnut 51 ist zwischen der Erhebung 48 und der ersten Vertiefung 45 angeordnet, die zweite Freistellungsnut 52 zwischen der ersten und zweiten Vertiefung 45, 46, die dritte Freistellungsnut 53 zwischen der zweiten und dritten Vertiefung 46, 47 und die vierte Freistellungsnut 54 zwischen der dritten Vertiefung 47 und der Erhebung 48.

In der Grundposition greift die Erhebung 48 der ersten Führungseinrichtung 42 in die zweite Vertiefung der zweiten Führungseinrichtung ein und die Erhebung der zweiten Führungseinrichtung greift in die zweite Vertiefung 46 der ersten Führungseinrichtung 42 ein. Um ein um 90° versetzt angeordnetes Bohrloch zu erzeugen, wird die Feststelleinrichtung 25 gelöst und die Führungsschiene 11 um die Drehachse 23 in die um 90° versetzte Position gedreht. bei der die Erhebung 48 der ersten Führungseinrichtung 42 in die dritte Vertiefung der zweiten Führungseinrichtung und die Erhebung der zweiten Führungseinrichtung in die erste Vertiefung 45 der ersten Führungseinrichtung 42 eingreift. Anschließend wird die Feststelleinrichtung 25 geschlossen und das Gerätesystem 1 ist bereit für die nächste Kernlochbohrung.

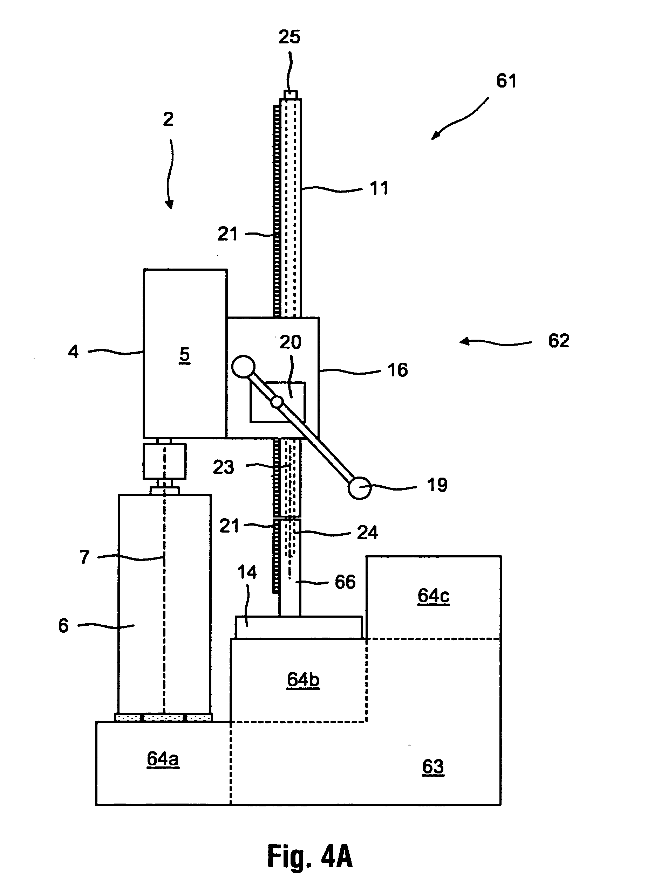

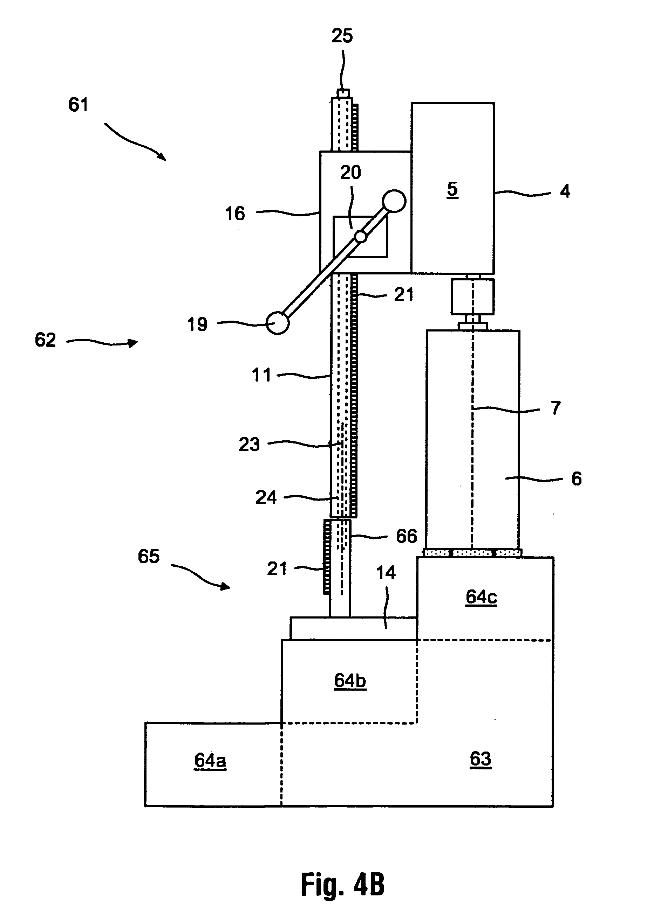

**Fign. 4A**, B zeigen eine Anwendung eines ständergeführten Gerätesystems 61 mit einem erfindungsgemässen Bohrständer **62** beim Erstellen von Kernlochbohrungen in einer Treppe **63** mit einer ersten Treppenstufe **64a**, einer zweiten Treppenstufe **64b** und einer dritten Treppenstufe **64c**. Dabei zeigt Fig. 4A das Gerätesystem 61 in einer ersten Anordnung, bei der in der tiefer liegenden, ersten Treppenstufe 64a eine Kernlochbohrung durchgeführt wird, und Fig. 4B das Gerätesystem 61 in einer zweiten Anordnung, bei der in der höher liegenden dritten Treppenstufe 64c eine Kernlochbohrung durchgeführt wird.

Der Bohrständer 62 unterscheidet sich durch den Aufbau der Grundplatte **65** vom Bohrständer 3 der Fig. 1. Die Grundplatte 65 umfasst neben der Befestigungsplatte 14, mit der die Grundplatte 65 am Untergrund 8 befestigt wird, einen weiteren Führungsschienenabschnitt **66.** Der Führungsschienenabschnitt 66 umfasst wie die Führungsschiene 11 die Kontureinrichtung 21, die in die Gegenkontureinrichtung 22 der Übertragungseinrichtung 20 eingreift.

Um die Führungsschiene 11 sicher mit der Grundplatte 9 zu verbinden, ist der Führungsschienenabschnitt 66 nicht neigbar ausgebildet, sondern fest mit der Grundplatte 65 verbunden. Beim Erstellen von Kernlochbohrungen wirken große Kräfte und Drehmomente, die aufgenommen werden müssen. Bei Bedarf kann der Führungsschienenabschnitt 66 über ein Neigungsgelenk neigbar zur Befestigungsplatte 14 ausgebildet sein.

Der Bohrständer 62 ist mittels der Befestigungseinrichtung 10 auf der zweiten Treppenstufe 64b befestigt. Der Bohrständer 62 wird so auf der zweiten Treppenstufe 64b ausgerichtet, dass die Kontureinrichtung 21 der Führungsschiene 11 und die Kontureinrichtung 21 des Führungsschienenabschnittes 66 in der Grundposition in der ersten Anordnung, bei der die Kernlochbohrung in der tiefer liegenden ersten Treppenstufe 64a erfolgt, fluchten. Dies hat den Vorteil, dass der Führungsschlitten 16 mittels der Vorschubeinrichtung 17 auch entlang des Führungsschienenabschnittes 66 verschiebbar ist.

Die um die Drehachse 23 drehbar ausgebildete Führungsschiene 11 ermöglicht es, dass das Kernbohrgerät 2, das auf der zweiten Treppenstufe 64b befestigt ist, Kernlochbohrungen in der ersten und dritten Treppenstufe 64a, 64c durchführt.

## Patentansprüche

1. Vorrichtung (3; 62) zur Führung eines Werkzeuggerätes (2) entlang einer Vorschubrichtung (18) bestehend aus einer Grundplatte (9; 65), die mittels einer Befestigungseinrichtung (10) an einem Untergrund (8) befestigbar ist, einer Führungsschiene (11), die mit der Grundplatte (9; 65) verbindbar ist und eine Kontureinrichtung (21) aufweist, und einem Führungsschlitten (16) zur Führung des Werkzeuggerätes (2) entlang der Vorschubrichtung (18), wobei der Führungsschlitten (16) eine Gegenkontureinrichtung (22), die mit der Kontureinrichtung (21) in Eingriff bringbar ist, aufweist, und wobei
die Führungsschiene (11) mit einem Achselement (24) verbunden ist und relativ zur Grundplatte (9) um eine zur Vorschubrichtung (18) parallele Drehachse (23) drehbar ausgebildet ist,
**dadurch gekennzeichnet, dass** die Grundplatte (65) eine Befestigungsplatte (14), die mittels der Befestigungseinrichtung (10) am Untergrund (8) befestigbar ist, und einen Führungsschienenabschnitt (66) mit einer Kontureinrichtung (21) umfasst, wobei die Gegenkontureinnchtung (22) mit der Kontureinrichtung (21) des Führungsschienenabschnitts (66) in Eingriff bringbar ist und wobei der Führungsschienenabschnitt (66) mit dem Achselement (24) verbunden ist und die Führungsschiene (11) relativ zum Führungsschienenabschnitt (66) um die Drehachse (23) drehbar ausgebildet ist.

2. Vorrichtung nach Anspruch 1,
dadurch gekennzelchnet, dass das Achselement (24) in einem ersten Lagerelement (31) der Grundplatte (9) und einem zweiten Lagerelement (32) der Führungsschiene (11) gelagert ist.

3. Vorrichtung nach Anspruch 2,
**dadurch gekennzeichnet, dass** das Achselement (24) in einem weiteren Lagerelement (33) der Führungsschiene (11) gelagert ist, wobei das weitere Lagerelement (33) an einem der Grundplatte (9) abgewandten Ende der Führungsschiene (11) angeordnet ist.

4. Vorrichtung nach einem der Ansprüche 1 bis 3,
**dadurch gekennzeichnet, dass** das Achselement (24) drehfest mit der Grundplatte (9) verbunden ist und die Führungsschiene (11) relativ zum Achselement (24) um die Drehachse (23) drehbar ausgebildet ist.

5. Vorrichtung nach einem der Anspruche 1 bis 3,
**dadurch gekennzeichnet, dass** das Achselement (24) drehfest mit der Führungsschiene (11) verbunden und relativ zur Grundplatte (9) um die Drehachse (23) drehbar ausgebildet ist.

6. Vorrichtung nach einem der Ansprüche 1 bis 5,
**dadurch gekennzeichnet, dass** eine Feststelleinrichtung (25) zur Feststellung der Führungsschiene (11) vorgesehen ist, wobei die Führungsschiene (11) mittels der Feststelleinrichtung (25) zwischen einer Versteliposition, in der die Führungsschiene (11) relativ zur Grundplatte (9; 65) um die Drehachse (23) drehbar ausgebildet ist, und einer Feststellposition, in der die Führungsschiene (11) relativ zur Grundplatte (9; 65) drehfest ausgebildet ist, verstellbar ist.

7. Vorrichtung nach einem der Ansprüche 1 bis 6,
**dadurch gekennzeichnet, dass** zwischen der Führungsschiene (11) und der Grundplatte (9) eine Vorrichtung (43) zum Ausrichten der Führungsschiene (11) vorgesehen ist.

8. Vorrichtung nach Anspruch 7,
**dadurch gekennzeichnet, dass** die Führungseinrichtung ein Federelement aufweist.

## Claims

1. Device (3; 62) for guiding a tool (2) in a feed direction (18), consisting of a base plate (9; 65) that can be fastened to a substrate (8) by means of a fastener (10), a guide rail (11) that can be connected to the base plate (9; 65) and has a contour means (21), and a guide carriage (16) for guiding the tool (2) in the feed direction (18), the guide carriage (16) having a mating contour means (22) that can be brought into engagement with the contour means (21) and the guide rail (11) being connected to an axle element (24) and being rotatable relative to the base plate (9) about an axis of rotation (23) parallel to the feed direction (18), **characterised in that** the base plate (65) includes a fastening plate (14) that can be fastened to the substrate (8) by means of the fastener (10), and a guide rail portion (66) having a contour means (21), wherein the mating contour means (22) can be brought into engagement with the contour means (21) of the guide rail portion (66) and wherein the guide rail portion (66) is connected to the axle element (24) and the guide rail (11) is rotatable relative to the guide rail portion (66) about the axis of rotation (23).

2. Device according to claim 1, **characterised in that** the axle element (24) is supported in a first bearing element (31) of the base plate (9) and in a second bearing element (32) of the guide rail (11).

3. Device according to claim 2, **characterised in that** the axle element (24) is supported in a further bearing element (33) of the guide rail (11), the further bearing element (33) being arranged at an end of the guide rail (11) directed away from the base plate (9).

4. Device according to one of claims 1 to 3, **characterised in that** the axle element (24) is non-rotatably connected to the base plate (9) and the guide rail (11) is rotatable relative to the axle element (24) about the axis of rotation (23).

5. Device according to one of claims 1 to 3, **characterised in that** the axle element (24) is non-rotatably connected to the guide rail (11) and is rotatable relative to the base plate (9) about the axis of rotation (23).

6. Device according to one of claims 1 to 5, **characterised by** a locking device (25) for locking the guide rail (11) in position, the guide rail (11) being adjustable by means of the locking device (25) between an adjusting position in which the guide rail (11) is rotatable relative to the base plate (9; 65) about the axis of rotation (23) and a locking position in which the guide rail (11) cannot rotate relative to the base plate (9; 65).

7. Device according to one of claims 1 to 6, cliaracterised in that a device (43) for aligning the guide rail (11) is provided between the guide rail (11) and the base plate (9).

8. Device according to claim 7, **characterised in that** the guide means has a spring element.

## Revendications

1. Dispositif (3 ; 62) pour guider un outil (2) le long d'une direction d'avance (18), constitué d'une platine (9 ; 65) qui peut être fixée sur une surface sous-jacente (8) au moyen d'un dispositif de fixation (10), d'un rail de guidage (11) qui peut être relié à la platine (9 ; 65) et qui présente un dispositif profilé (21), et d'un coulisseau de guidage (16) pour guider l'outil (2) le long de la direction d'avance (18), le coulisseau de guidage (16) comportant un dispositif profilé complémentaire (22) qui peut engrener avec le dispositif profilé (21), et
dans lequel le rail de guidage (11) est relié à un élément d'axe (24) et est configuré de manière à pouvoir tourner par rapport à la platine (9) autour d'un axe de rotation (23) parallèle à la direction d'avance (18),
**caractérisé en ce que** la platine (65) inclut une plaque de fixation (14) qui peut être fixée sur la surface sous-jacente (8) au moyen du dispositif de fixation (10), et une portion de rail de guidage (66) avec un dispositif profilé (21), le dispositif profilé complémentaire (22) pouvant engrener avec le dispositif profilé (21) de la portion de rail de guidage (66), et la portion de rail de guidage (66) étant reliée à l'élément d'axe (24) et le rail de guidage (11) étant configuré de manière à pouvoir tourner par rapport à la portion de rail de guidage (66) autour de l'axe de rotation (23).

2. Dispositif selon la revendication 1, **caractérisé en ce que** l'élément d'axe (24) est monté dans un premier élément de palier (31) de la platine (9) et un second élément de palier (32) du rail de guidage (11).

3. Dispositif selon la revendication 2, **caractérisé en ce que** l'élément d'axe (24) est monté dans un élément de palier supplémentaire (33) du rail de guidage (11), dans lequel l'élément de palier supplémentaire (33) est agencé sur une extrémité du rail de guidage (11) opposée à la platine (9).

4. Dispositif selon l'une quelconque des revendications 1 à 3, **caractérisé en ce que** l'élément d'axe (24) est relié à la platine (9) de manière non rotative, et le rail de guidage (11) est configuré de manière à pouvoir tourner par rapport à l'élément d'axe (24) autour de l'axe de rotation (23).

5. Dispositif selon l'une quelconque des revendications 1 à 3, **caractérisé en ce que** l'élément d'axe (24) est relié au rail de guidage (11) de manière non rotative et est configuré de manière à pouvoir tourner par rapport à la platine (9) autour de l'axe de rotation (23) .

6. Dispositif selon l'une quelconque des revendications 1 à 5, **caractérisé en ce que** des moyens de blocage (25) sont prévus pour bloquer le rail de guidage (11), le rail de guidage (11) pouvant être réglé au moyen des moyens de blocage (25) entre une position de réglage, dans laquelle le rail de guidage (11) est configuré de manière à pouvoir tourner par rapport à la platine (9 ; 65) autour de l'axe de rotation (23), et une position de blocage, dans laquelle le rail de guidage (11) est configuré de manière non rotative par rapport à la platine (9 ; 65) .

7. Dispositif selon l'une quelconque des revendications 1 à 6, **caractérisé en ce qu'**un dispositif (43) est prévu entre le rail de guidage (11) et la platine (9) afin d'orienter le rail de guidage (11).

8. Dispositif selon la revendication 7, **caractérisé en ce que** le dispositif de guidage comporte un élément à ressort.
